# EUROPÄISCHE PATENTSCHRIFT

(11) **EP 1 224 055 B1**
(45) Veröffentlichungstag und Bekanntmachung des Hinweises auf die Patenterteilung: **09.08.2006**
(21) Anmeldenummer: 00962368.7
(22) Anmeldetag: 24.08.2000
(51) Int. Cl.: B23Q 1/54

(54) **BEARBEITUNGSMASCHINE ZUM MEHRACHSIGEN BEWEGEN EINES WERKZEUGES ODER WERKSTÜCKES**
PROCESSING MACHINE FOR MOVING A TOOL OR WORKPIECE IN A MULTIAXIAL MANNER
MACHINE D'USINAGE POUR LE DEPLACEMENT DANS PLUSIEURS AXES D'UN OUTIL OU D'UNE PIECE

(30) Priorität: 30.10.1999 DE 19952423
(43) Veröffentlichungstag der Anmeldung: 24.07.2002
(73) Patentinhaber: Fraunhofer-Gesellschaft zur Förderung der angewandten Forschung e.V., 80686 München (DE)
(72) Erfinder: HANRATH, Georg, Fond Du Lac, WI 54935 (US)
(74) Vertreter: Grünecker, Kinkeldey, Stockmair & Schwanhäusser Anwaltssozietät
(86) Internationale Anmeldenummer: PCT/EP2000/008242
(87) Internationale Veröffentlichungsnummer: WO 2001/032355

(56) Entgegenhaltungen:
- EP-A- 0 109 201
- EP-A- 0 674 969
- EP-A- 0 925 870
- EP-A- 0 939 295
- WO-A-97/22436
- WO-A-97/47428
- WO-A-99/32256
- DE-U- 29 818 719
- FR-A- 2 770 432
- GB-A- 2 088 987
- US-A- 4 819 496
- NEUGEBAUER R ET AL: "NEUE WERKZEUG-MASCHINENSTRUKTUREN. NEW MACHINE TOOL STRUCTURES" ZWF ZEITSCHRIFT FUR WIRTSCHAFTLICHE FERTIGUNG UND AUTOMATISIERUNG,DE,CARL HANSER VERLAG. MUNCHEN, Bd. 91, Nr. 7/08, 1. Juli 1996 (1996-07-01), Seiten 363-366, XP000637724 ISSN: 0947-0085

## Beschreibung

Die Erfindung betrifft eine Bearbeitungsmaschine zum mehrachsigen Bewegen eines Werkzeuges oder Werkstückes mit einer das Werkzeug oder das Werkstück tragenden Halterung gemäß dem Oberbegriff des Patentanspruches 1.

Aus Industrieanzeiger AWK 99, S. 39, Juni 1999, "Die neuen Systeme müssen schnell und zuverlässig sein", M. Krell, ist eine Bearbeitungsmaschine bekannt, wobei die Antriebe als verfahrbare Schlitteneinheiten ausgebildet sind, die jeweils eine um ihre Querachse drehbar gelagerte Koppel tragen, die an ihrem anderen Ende über ein Gelenk mit drei Drehfreiheitsgraden (Kugelgelenk) mit der Halterung für das Werkzeug oder Werkstück verbunden ist. Die genannte Bearbeitungsmaschine hebt zwar den Nachteil von konventionellen Maschinen, die einen seriellen Aufbau der einzelnen Antriebe aufweisen, auf, indem drei parallel angeordnete Linearaktoren Anwendung finden, also eine Parallel-Kinematik ausgebildet ist. Jedoch weist diese Ausführung verschiedene Nachteile auf.

Um ausreichende Verfahrwege und Orientierungswinkel zu erreichen, benötigen die Schlitteneinheiten Führungs- und Antriebssysteme, welche in der Z-Bewegungsrichtung angeordnet sind und fest mit z. B. einem Rahmen verbunden sind. Dies hat zur Folge, dass die Schlitteneinheiten mit dem erforderlichen Unterbau in den Arbeitsraum der Maschine hineinragen und den kollisionsfreien Arbeitsraum stark einschränken.

Die oben genannten Schlitteneinheiten mit Unterbau schränken die Bewegungs- und Orientierungsmöglichkeit der Vorrichtung stark ein, da im eingefahrenen Zustand (minimaler Z-Hub) bei der Orientierung der Plattform Kollisionen der Plattform/Hauptspindel mit den Schlitteneinheiten vermieden werden müssen.

Auch bei geringem Z-Hub der Bearbeitungsmaschine ragen die Schlitteneinheiten in den Arbeitsraum, da der verbleibende Z-Hub der Linearaktoren zur Orientierung der Bearbeitungsmaschine vorgehalten werden muss.

Um eine ausreichende Steifigkeit der auskragenden Schütteneinheiten zu gewährleisten, muss der Unterbau der Schlitteneinheiten steif ausgeführt werden, so daß sich ein hohes Gesamtgewicht der Vorrichtung, welche in der Regel als Einheit in zwei weiteren linearen Achsen bewegt wird, mit entsprechend geringer Dynamik ergibt.

Die erzielbare Genauigkeit der Vorrichtung wird dadurch eingeschränkt, daß sich ein Koppelglied zwischen der Plattform und den Antrieben mit den Meßsystemen befindet. Thermische Verlagerungen durch Temperaturveränderungen der Koppeln sowie Fertigungs- und Montageungenauigkeiten der beidseitig gelagerten Koppeln werden durch das an der Schlitteneinheit befestigte Meßsystem nicht erfaßt.

Aus der Veröffentlichung "Neue Werkzeug-Maschinenstrukturen. New Machine Tool Structures" in der Zeitschrift für wirtschaftliche Fertigung und Automatisierung, DE, Carl Hanser Verlag, München, vol. 91, no. 7/08, 1. Juli 1996 (1996-07-01), Seiten 363-366, ISSN: 0947-0085, ist eine Fräsmaschine gemäß dem Oberbegriff des unabhängigen Anspruchs 1 bekannt, welche je drei Dreh- und Schubantriebe aufweist. Diese Fräsmaschine (bei der es sich um eine "Vision" einer Fräsmaschine nach Tindal aus dem Jahre 1965/66 handelt) umfaßt eine das Werkstück/Werkzeug tragende Halterung, welche über drei längenveränderbare Streben mit einem orstfesten Gestell verbunden ist. Zwischen der das Werkstück/Werkzeug tragenden Halterung sind Kugelgelenke angeordnet. Zwischen den längenveränderbaren Streben und dem Gestell sind jeweils Kardangelenke mit zwei Freiheitsgraden angeordnet. Diese Fräsmaschine weist dementsprechend drei Führungsketten auf. Jede der Führungsketten umfaßt gestellseitig ein Gelenk mit zwei Freiheitsgraden und antriebsseitig ein Gelenk mit drei Freiheitsgraden, wobei über die längenveränderbaren Streben jeweils ein weiterer linearer Freiheitsgrad vorhanden ist.

Aus der EP 0 674 968 A1, ist eine Vorrichtung zum mehrachsigen Bewegen eines bewegbaren Armes mit einem Gestell bekannt, wobei zwischen Gestell und bewegbarem Arm drei längenveränderbare Streben angeordnet sind. Diese weisen sowohl auf Seiten des Gestells als auch auf Seiten des bewegbaren Armes jeweils Universalgelenke mit drei Freiheitsgraden auf. Die hierdurch jeweils vorhandenen drei Rotationsfreiheitsgrade werden über passiv wirkende Blockiereinrichtungen festgelegt.

Die US 4,819,496 offenbart einen Mikromanipulator, bei dem eine Basis mit einer Arbeitsplattform mittels sechs Streben verbunden sind, wobei die Streben auf Seiten der Basis jeweils einzeln gelagert sind, und wobei auf Seiten der Arbeitsplattform jeweils zwei Streben miteinander in einem gemeinsamen Gelenk verbunden sind. Am Außenumfang der Basis sind U-Profile angeordnet, welche jeweils eine Antriebsvorrichtung für die Streben lagern. Diese U-Profile sind an der Basis drehbeweglich angeordnet. Dementsprechend weisen die basisseitigen Lagerungen der Streben jeweils (zumindest) zwei Drehfreiheitsgrade auf.

Der vorliegenden Erfindung liegt die Aufgabe zugrunde, den Aufbau der eingangs genannten Bearbeitungsmaschine zu vereinfachen und zugleich die Genauigkeit der Bewegung des Werkzeuges oder Werkstückes zu verbessern.

Diese Aufgabe wird erfindungsgemäß gelöst durch eine Bearbeitungsmaschine mit den Merkmalen des Patentanspruches 1.

Die einachsigen Drehgelenke verbinden dabei die Antriebe mit dem Gestell, und mit Hilfe der Linearaktoren ist der Abstand zwischen den Drehgelenken und den Gelenken mit drei Drehfreiheitsgraden veränderbar. Es werden also sowohl der Antrieb der das Werkzeug oder das Werkstück tragenden Halterung als auch die Sperrung der verbleibenden drei Freiheitsgrade von den drei Linearaktoren ohne Zwischenelemente, wie z. B. Koppeln, realisiert. Dabei haben die Linearaktoren gegenüber den Antrieben einen linearen Freiheitsgrad und werden von den Antrieben entlang dieses linearen Freiheitsgrades bewegt. Daraus ergibt sich in vorteilhafter Weise, daß die Linearaktoren lediglich eine einfache Drehlagerung im Rahmen benötigen, ohne daß es eines weiteren Unterbaus bedarf.

Dies hat zur Folge, daß keine Gestellbauteile, die permanent in den Arbeitsraum hineinragen, erforderlich sind und somit den Arbeitsraum nicht einschränken bzw. beim Verfahren der gesamten Bearbeitungsmaschine im Arbeitsraum keine Kollisionsgefahr darstellen. Da auf den oben genannten Unterbau verzichtet werden kann, besitzt die Bearbeitungsmaschine eine vergrößerte Orientierungsmöglichkeit, die nicht durch Kollisionen der Linearaktoren mit dem oben genannten Unterbau eingeschränkt wird.

Weiterhin beschränkt sich die Störkontur der Bearbeitungsmaschine in jedem Arbeitspunkt auf das minimal Notwendige, da z. B. bei geringem Hub in z-Richtung keine Schlitteneinheiten in den Arbeitsraum ragen, die zur Orientierung der Bearbeitungsmaschine vorgehalten werden müssen. Das Fehlen der herausragenden Schlitteneinheiten mit dem erforderlichen Unterbau führt darüber hinaus zu einem geringeren Gesamtgewicht der Bearbeitungsmaschine, so daß eine höhere Dynamik beim Verfahren der gesamten Bearbeitungsmaschine mit nachgeschalteten seriellen Achsen erreicht wird.

In bevorzugter Weise ist die Halterung als Plattform ausgebildet, so daß in herkömmlicher Weise ein Werkstück daran befestigt werden kann. Andererseits kann die Halterung in Form einer Plattform genügend Fläche bieten, um ein Werkzeug daran zu befestigen. Als Werkzeug kann beispielsweise eine Hauptspindel mit Werkzeug oder jede andere Art von Werkzeug vorgesehen sein.

Weiter bevorzugt ist es, die Linearaktoren in einer 120°-Teilung anzuordnen, wobei benfalls die kardanischen Gelenke in einer derartigen Winkelteilung an der Halterung befestigt sind. Diese Winkelaufteilung bietet den Vorteil, daß die Linearaktoren an Punkten an der Halterung angreifen, die jeweils einen gleichen Abstand zueinander aufweisen. Dadurch wird nicht zuletzt auch die Berechnung der Anordnung der Halterung im Raum und somit die Ansteuerung der Antriebe vereinfacht.

In weiter bevorzugter Weise sind die Gelenke mit drei Drehfreiheitsgraden als Kugelgelenke ausgebildet.

Vorzugsweise sind weiterhin die Antriebe als Lineardirekt-, Kugelgewinde-, Teleskop- oder als Zahnstangen-Ritzelantriebe ausgebildet.

Weiterhin können die Antriebe eine Linearmeßvorrichtung aufweisen, um die Position der Linearaktoren genau bestimmen zu können. Daraus ergibt sich die Möglichkeit der direkten Messung der Stellwege der Linearaktoren zwischen den an der Halterung befestigten Gelenken mit drei Drehfreiheitsgraden und den Antrieben ohne Zwischenglieder. Dadurch wird eine höhere Genauigkeit bei der Bewegung und Positionierung des Werkzeuges oder Werkstückes erreicht.

In besonders bevorzugter Weise sind Halterungen zum Tragen der Antriebe vorgesehen, so daß die Antriebe nicht direkt über die Drehgelenke mit dem Gestell verbunden werden müssen. Die Halterungen sind dabei vorzugsweise als Antriebskästen ausgebildet, die außenseitig über das Drehgelenk mit dem Gestell verbunden sind und die innenseitig den Antrieb für den zugeordneten Linearaktor tragen. Bei der Ausführung des Linearaktors als Lineardirektantrieb trägt z.B. der Antriebskasten das Primärteil mit zwei gegenüberliegenden Primärmotoren und dazwischen ist ein langes Sekundärteil geführt, das aus einem Träger mit aufgeklebten Magneten besteht. Diese Ausführungsform ist insofern besonders geeignet als ohnehin eine gewisse Breite der Aktoren erforderlich ist, um Torsionskräfte um die Aktorlängsachse aufnehmen zu können und eine sehr hohe Dynamik erreicht wird.

In weiter bevorzugter Weise sind die Halterungen, insbesondere die Drehachsen der Drehgelenke in einer Ebene angeordnet. Dadurch wird die Berechnung der Position der Halterung des Werkzeuges oder Werkstückes vereinfacht, wobei vorzugsweise die Achsen der Drehgelenke quer zur Richtung der linearen Verstellung der Linearaktoren ausgerichtet sind.

Weiterhin bevorzugt ist, daß das Gestell als Rahmen ausgebildet ist, so daß einerseits bei ausreichender Stabilität nur ein minimales Gewicht für den Rahmen erforderlich ist. Andererseits wird die Bewegungsfreiheit insbesondere im Bereich der z-Achse durch eine entsprechende im Gestellrahmen ausgebildete Öffnung weitgehend uneingeschränkt gewährleistet.

Die zuvor beschriebene Bearbeitungsmaschine ermöglicht ein mehrachsiges Bewegen eines Werkzeuges oder eines Werkstückes in einem tranlatorischen und zwei rotatorischen Freiheitsgraden. Um die für eine Bewegung im Raum erforderlichen zwei weiteren translatorischen Freiheitsgrade zu realisieren, sind in bevorzugter Weise mindestens ein, vorzugsweise zwei Antriebe vorgesehen, die das Gestell linear, vorzugsweise senkrecht zur z-Achse verstellen. Somit kann mit Hilfe der Bearbeitungsmaschine das Werkstück oder Werkzeug im gesamten dreidimensionalen Raum innerhalb des vorgegebenen Arbeitsbereiches bewegt werden.

Im Folgenden wird die Erfindung anhand eines Ausführungsbeispieles näher erläutert, wobei auf die beigefügte Zeichnung bezug genommen wird. In der Zeichnung zeigen:
- Fig. 1: ein Ausführungsbeispiel der Bearbeitungsmaschine in einer perspektivischen Darstellung, wobei die als Plattform ausgebildete Halterung 5 parallel zum Gestell 3 angeordnet ist,
- Fig. 2: die in Fig. 1 dargestellte Bearbeitungsmaschine in einer perspektivischen Darstellung, einen anderen Bewegungszustand darstellend, wobei die Halterung 5 um die beiden Drehachsen A, B anders orientiert ist, und
- Fig.3: die in Fig. 1 und 2 dargestellte Bearbeitungsmaschine mit einer Vorrichtung zum Verfahren in x-und y-Richtung.

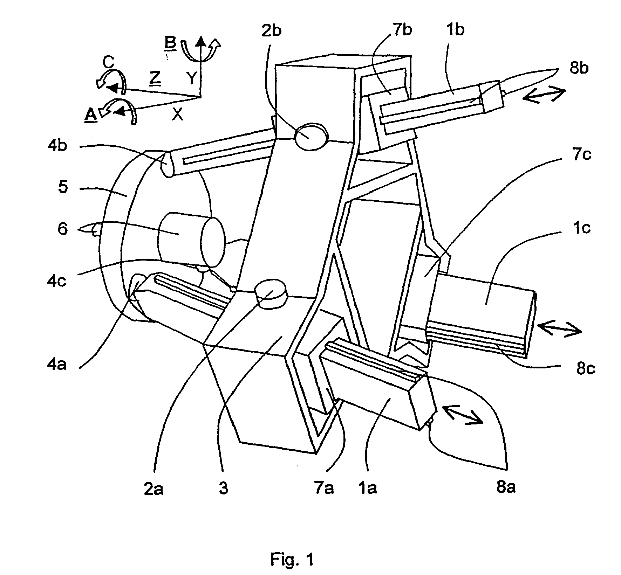

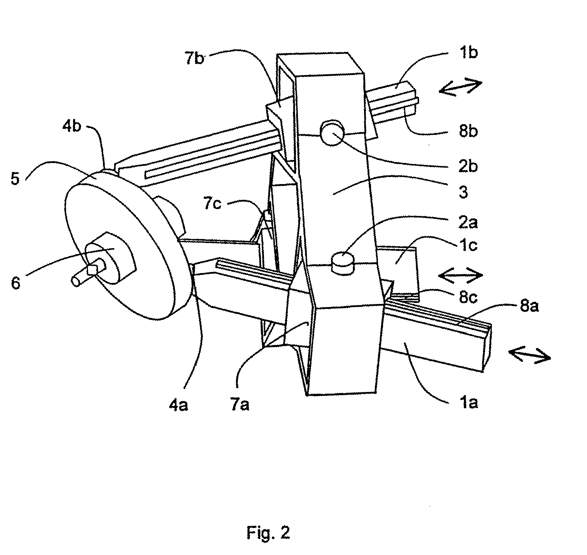

In den Fig. 1 und 2 ist ein Ausführungsbeispiel der Bearbeitungsmaschine zum mehrachsigen Bewegen eines Werkzeuges 6 dargestellt, die eine das Werkzeug 6 tragende Halterung 5 aufweist. Weiterhin sind drei Linearaktoren1a, 1b und 1c vorgesehen, die über drei Gelenke mit drei Drehfreiheitsgraden 4a, 4b und 4c mit der Halterung 5 verbunden sind. Die Linearaktoren 1a, 1b und 1c werden durch Antriebe 7a, 7b und 7c linear entlang ihres Freiheitsgrades verstellt. Darüber hinaus ist ein Gestell 3 vorgesehen, das die Antriebe 7a, 7b und 7c bzw. bei den Lineardirektantrieben die Antriebskästen trägt. Vorliegend sind einachsige Drehgelenke 2a, 2b und 2c vorgesehen, die die Antriebe 7a, 7b und 7c mit dem Gestell 3 verbinden. Somit können die Linearaktoren 1a, 1 b und 1 c linear von den Antrieben 7a, 7b und 7c verstellt werden, während gleichzeitig, abhängig von der Position der Halterung 5 die Linearaktoren 1a, 1 b und 1c über die Antriebe 7a, 7b und 7c um die einachsigen Drehgelenke 2a, 2b und 2c verschwenkt werden können.

Wie die Fig. 1 bis 3 zeigen, ist die Halterung 5 als Plattform ausgebildet, die von Linearaktoren 1a, 1b und 1c im Raum verstellt werden kann. Die drei Aktoren stellen die z-Position sowie die Orientierung um x und y ein.

Die Linearaktoren 1a, 1b und 1 c sowie die Gelenke 4a, 4b und 4c sind in einer 120°-Teilung angeordnet. Weiterhin sind die Gelenke 4a, 4b und 4c als Kugelgelenke ausgebildet.

Die Antriebe 7a, 7b und 7c sind in bevorzugter Weise als Lineardirektantriebe ausgebildet. Für ein genaues Führen der Linearaktoren 1a, 1b und 1 c sind Linearführungen 8a, 8b und 8c vorgesehen, die mit den Antrieben 7a, 7b und 7c zusammenwirken.

In den Figuren sind die Antriebe 7a, 7b und 7c schematisch als Antriebskästen dargestellt. Der Aufbau der Antriebskästen ist dabei derart ausgebildet, daß zum einen als Kästen ausgebildete Halterungen vorgesehen sind, die außenseitig mit den Drehgelenken 2a, 2b und 2c verbunden sind, und die innenseitig die Primärteile der Antriebe 7a, 7b und 7c tragen. Die Primärteile wirken dann mit den Sekundärteilen, beispielsweise den Linearführungen 8a, 8b und 8c für ein Verstellen der Linearaktoren 1a, 1b und 1 c zusammen. Wie die Fig. 1 und 2 weiterhin zeigen, sind die Antriebe bzw. die Halterungen einschließlich der Antriebe 7a, 7b und 7c in einer Ebene im Gestell 3 angeordnet. Dazu ist das Gestell 3 als Rahmen ausgebildet, das zum einen als Wiederlager für die Drehgelenke 2a, 2b und 2c dient und andererseits im Bereich der z-Achse eine ausreichende Öffnung aufweist, um die Bewegung der Halterung 5 einschließlich des damit verbunden Werkzeuges 6 minimal zu beeinträchtigen.

Schließlich ist aus den Fig. 1 und 2 ersichtlich, daß die Achsen der Drehgelenke 2a, 2b und 2c quer zur Richtung der linearen Verstellrichtung der Linearaktoren 1 a, 1 b und 1 c ausgerichtet sind.

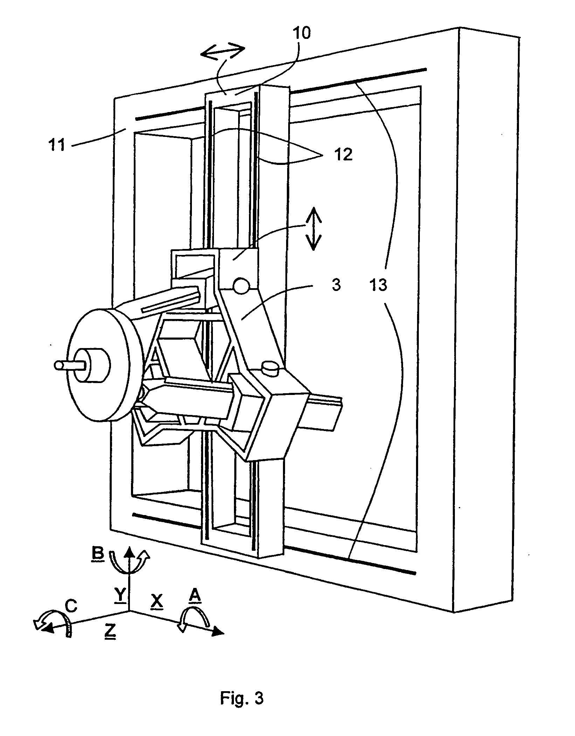

In Fig. 3 ist die in den Fig. 1 und 2 dargestellte Bearbeitungsmaschine durch Mittel zum Verstellen entlang der x-und der y-Achse ergänzt worden. Das Gestell 3 dient dabei als y-Schlitten, der entlang eines x Schlittens auf den Führungsschienen 12 in y-Richtung verstellbar angeordnet ist. Der x-Schlitten 10 ist dagegen entlang den Führungsschienen 13 verstellbar, die an einem ortsfesten Gestell 11 befestigt sind. Somit kann das Gestell 3 in x-und y-Richtung bewegt werden. Insgesamt werden fünf Freiheitsgrade in den Richtungen x, y, z, A und B kontrolliert.

## Patentansprüche

1. Bearbeitungsmaschine zum mehrachsigen Bewegen eines Werkzeuges (6) oder Werkstückes mit einer das Werkzeug (6) oder Werkstück tragenden Halterung (5), einem Gestell (3) und drei am Gestell gelagerten Linearaktoren (1a, 1b, 1 c), wobei jeder der Linearaktoren (1 a, 1 b, 1 c) mit der Halterung (5) mittels jeweils eines Gelenks (4a, 4b, 4c) mit drei Freiheitsgraden verbunden ist,
und wobei ein Abstand zwischen den gestellseitigen Lagern und den Gelenken mit drei Freiheitsgraden der jeweiligen Linearaktoren (1a, 1b, 1c) veränderbar ist, **dadurch gekennzeichnet, daß** zwischen jedem der Linearaktoren (1a, 1b, 1c) und dem Gestell ein Antrieb (7a, 7b, 7c) angeordnet ist, welcher mit dem Gestell (3) als Widerlager mittels eines einachsigen Drehgelenkes (2a, 2b, 2c) mit genau einem Drehfreiheitsgrad verbunden ist, und mit dem die Linearaktoren (1 a, 1b, 1c) derart verstellbar sind, daß der Abstand zwischen den einachsigen Drehgelenken (2a, 2b, 2c) und den Gelenken (4a, 4b, 4c) mit drei Freiheitsgraden veränderbar ist, und wobei die Achsen der einachsigen Drehgelenke (2a, 2b, 2c) quer zu den Richtungen der linearen Verstellung der Linearaktoren (1a, 1b, 1c) ausgerichtet sind.

2. Bearbeitungsmaschine nach Anspruch 1, **dadurch gekennzeichnet, daß** die Halterung (5) als Plattform ausgebildet ist.

3. Bearbeitungsmaschine nach Anspruch 1 oder 2, **dadurch gekennzeichnet, daß** die Linearaktoren (1a, 1b, 1c) und/oder die Gelenke (4a, 4b, 4c) in einer 120°-Teilung angeordnet sind.

4. Bearbeitungsmaschine nach einem der Ansprüche 1 bis 3, **dadurch gekennzeichnet, daß** die Gelenke (4a, 4b, 4c) als Kugelgelenke ausgebildet sind.

5. Bearbeitungsmaschine nach einem der Ansprüche 1 bis 4, **dadurch gekennzeichnet, daß** die Antriebe (7a, 7b, 7c) als Lineardirekt-, Kugelgewinde-, Teleskop-, Zahnstangen-Ritzelantriebe oder als Hydraulik-bzw. Pneumatikzylinder ausgebildet sind.

6. Bearbeitungsmaschine nach einem der Ansprüche 1 bis 5, **dadurch gekennzeichnet, daß** die Antriebe (7a, 7b, 7c) Linearmessvorrichtungen aufweisen, die direkt den Abstand zwischen der Halterung (5) und den Antrieben (7a, 7b, 7c) messen.

7. Bearbeitungsmaschine nach einem der Ansprüche 1 bis 6, **dadurch gekennzeichnet, daß** Halterungen zum Tragen der Antriebe (7a, 7b, 7c) vorgesehen sind.

8. Bearbeitungsmaschine nach Anspruch 7, **dadurch gekennzeichnet, daß** die Halterungen in einer Ebene angeordnet sind.

9. Bearbeitungsmaschine nach einem der Ansprüche 1 bis 8, **dadurch gekennzeichnet, daß** das Gestell (3) als Rahmen ausgebildet ist.

10. Bearbeitungsmaschine nach einem der Ansprüche 1 bis 9, **dadurch gekennzeichnet, daß** mindestens ein Antrieb vorgesehen ist, der das Gestell (3) linear, vorzugsweise senkrecht zur z-Achse verstellt.

## Claims

1. Processing machine for moving a tool (6) or workpiece in a multiaxial manner with a holding device (5) carrying the tool (6) or workpiece, a mounting (3) and three linear actuators (1a, 1b, 1c) supported on the mounting, each of the linear actuators (1a, 1b, 1c) being connected to the holding device (5) by means of one respective joint (4a, 4b, 4c) with three degrees of freedom,
and a spacing being able to be altered between the bearings on the mounting side and the joints with three degrees of freedom of the respective linear actuators (1a, 1b, 1c),
**characterised in that** between each of the linear actuators (1a, 1b, 1c) and the mounting a drive device (7a, 7b, 7c) is arranged which is connected to the mounting (3) as an abutment by means of a uniaxial rotary joint (2a, 2b, 2c) with just one rotational degree of freedom and with which the linear actuators (1a, 1b, 1c) are adjustable such that the spacing may be altered between the uniaxial rotary joints (2a, 2b, 2c) and the joints (4a, 4b, 4c) with three degrees of freedom, and the axes of the uniaxial rotary joints (2a, 2b, 2c) being aligned transversely to the directions of linear adjustment of the linear actuators (1a, 1b, 1c).

2. Processing machine according to claim 1, **characterised in that** the holding device (5) is configured as a platform.

3. Processing machine according to claim 1 or 2,
**characterised in that** the linear actuators (1a, 1b, 1c) and/or the joints (4a, 4b, 4c) are spaced at 120° apart.

4. Processing machine according to any one of claims 1 to 3, **characterised in that** the joints (4a, 4b, 4c) are configured as ball-and-socket joints.

5. Processing machine according to any one of claims 1 to 4, **characterised in that** the drive devices (7a, 7b, 7c) are configured as linear direct drives, ball screws, telescopic drives, rack and pinion drives or as hydraulic and/or pneumatic cylinders.

6. Processing machine according to any one of claims 1 to 5, **characterised in that** the drive devices (7a, 7b, 7c) have linear measuring devices which directly measure the spacing between the holding device (5) and the drive devices (7a, 7b, 7c).

7. Processing machine according to any one of claims 1 to 6, **characterised in that** the holding devices are provided to carry the drive devices (7a, 7b, 7c).

8. Processing machine according to claim 7, **characterised in that** the holding devices are arranged in one plane.

9. Processing machine according to any one of claims 1 to 8, **characterised in that** the mounting (3) is configured as a frame.

10. Processing machine according to any one of claims 1 to
9, **characterised in that** at least one drive device is provided which adjusts the mounting (3) in a linear manner, preferably perpendicular to the z-axis.

## Revendications

1. Machine d'usinage pour le déplacement sur plusieurs axes d'un outil (6) ou d'une pièce, comportant un support (5) portant l'outil (6) ou la pièce, un bâti (3) et trois actionneurs linéaires (1a, 1b, 1c) montés sur le bâti, chacun des actionneurs linéaires (1a, 1b, 1c) étant relié au support (5) respectivement par une articulation (4a, 4b, 4c) avec trois degrés de liberté, et la distance entre les paliers du côté bâti et les articulations avec trois degrés de liberté de chacun des actionneurs linéaires (1a, 1b, 1c) étant variable, **caractérisée en ce que**, entre chacun des actionneurs linéaires (1a, 1b, 1c) et le bâti, est agencé un système d'entraînement (7a, 7b, 7c), qui est relié au bâti (3), formant une contrebutée, au moyen d'une articulation de rotation (2a, 2b, 2c) à un axe et avec exactement un degré de liberté de rotation, et par lequel les actionneurs linéaires (1a, 1b, 1c) sont réglables de telle sorte que la distance entre les articulations de rotation (2a, 2b, 2c) à un axe et les articulations (4a, 4b, 4c) avec trois degrés de liberté est variable, les axes des articulations de rotation (2a, 2b, 2c) à un axe étant orientés perpendiculairement aux directions du réglage linéaire des actionneurs linéaires (1a, 1b, 1c).

2. Machine d'usinage selon la revendication 1, **caractérisée en ce que** le support (5) est réalisé sous forme de plate-forme.

3. Machine d'usinage selon la revendication 1 ou 2, **caractérisée en ce que** les actionneurs linéaires (1a, 1b, 1c) et/ou les articulations (4a, 4b, 4c) sont agencés selon un écartement de 120°.

4. Machine d'usinage selon l'une des revendications 1 à 3, **caractérisée en ce que** les articulations (4a, 4b, 4c) sont réalisées sous forme de joints à rotule.

5. Machine d'usinage selon l'une des revendications 1 à 4, **caractérisée en ce que** les systèmes d'entraînement (7a, 7b, 7c) sont réalisés sous forme d'entraînements linéaires directs, de vis d'entraînement à billes, d'entraînements télescopiques, d'entraînements à crémaillère et pignons ou sous forme de vérins hydrauliques ou vérins pneumatiques.

6. Machine d'usinage selon l'une des revendications 1 à 5, **caractérisée en ce que** les systèmes d'entraînement (7a, 7b, 7c) comportent des dispositifs de mesure linéaires, qui mesurent directement la distance entre le support (5) et les systèmes d'entraînement (7a, 7b, 7c).

7. Machine d'usinage selon l'une des revendications 1 à 6, **caractérisée en ce que** des supports destinés à porter les systèmes d'entraînement (7a, 7b, 7c) sont prévus.

8. Machine d'usinage selon la revendication 7, **caractérisée en ce que** les supports sont agencés dans un plan.

9. Machine d'usinage selon l'une des revendications 1 à 8, **caractérisée en ce que** le bâti (3) est conçu sous forme de cadre.

10. Machine d'usinage selon l'une des revendications 1 à 9, **caractérisée en ce qu'**il est prévu au moins un système d'entraînement, par lequel le bâti (3) est déplacé linéairement, de préférence perpendiculairement à l'axe z.
